# EUROPEAN PATENT APPLICATION

(11) **EP 2 506 341 A2**
(43) Date of publication of application: **03.10.2012**
(21) Application number: 12162404.3
(22) Date of filing: 30.03.2012
(51) Int. Cl.: H01M 2/34, H01M 10/48, H01M 2/02

(54) **Improved interchangeable rechargeable battery system**

(30) Priority: 31.03.2011 US 201161469923 P; 27.03.2012 US 201213430748
(71) Applicant: Black Diamond Equipment AG, 4153 Reinach (CH)
(72) Inventor: Skrivan, Joseph, Draper, UT Utah 84020 (US); Heinrich, Douglas, Salt Lake City, UT Utah 84109 (US); Best, Christopher, Park City, UT Utah 84098 (US); Saxton, Jeremy, Draper, UT Utah 84020 (US)
(74) Representative: Braun, André jr.

(57) **Abstract**

A rechargeable battery system, including a housing, a negative terminal, a positive terminal, and a third terminal. The housing substantially encloses a rechargeable electrical discharge member such as an electrochemical electrical storage device. The negative terminal is electrically coupled to the rechargeable electrical discharge member and may be electrically coupled to the housing. The positive terminal is electrically coupled to the rechargeable electrical discharge member and electrically isolated from the negative terminal. The third terminal is electrically coupled to the negative terminal. The third terminal is also physically isolated from both the positive and negative terminal. A non-conductive sleeve substantially encases the housing and the negative terminal around which the positive, negative, and third terminals are externally exposed. Therefore, an electrical device configured to operate with either a rechargeable or finite battery may selectively detect the electrical voltage across the positive and third terminal rather than the positive and negative terminal and automatically adjust the electrical operation to correspond with a rechargeable battery.

## Description

### FIELD OF THE INVENTION

The invention generally relates to an improved interchangeable rechargeable battery system. In particular, the present invention particularly relates to a rechargeable battery system that is configured to be physically interchangeable with a finite battery but automatically distinguishable by an electrical device.

### RELATED APPLICATIONS

This application claims priority to United States provisional application Serial No. 61/469,923 filed on March 31, 2011, the contents of which are incorporated by reference.

### BACKGROUND OF THE INVENTION

A battery is an electrical device that is configured to store and selectively discharge a finite amount of electrical current. In order to facilitate interchangeable usage, batteries conform to various universal form factors and operational configurations. For example, a popular form factor and operation configuration is the AA type battery that is shaped in a precise cylindrical format and configured to discharge a 1.5 volt direct current. In addition, the AA type battery includes a positive and a negative terminal positioned on opposing lengthwise ends of the cylindrical format. The uniformity among AA type batteries enables interchangeable usage between various electrical devices configured to receive one or more AA type batteries. Therefore, an electrical device manufacturer may include a precisely shaped receptacle within which a AA type battery may be selectively inserted.

The most common type of battery is a primary, disposable, or finite battery which includes a limited electrical power or capacity. A second type of battery is referred to as a rechargeable or secondary battery in that it includes the capability to selectively recharge the stored electrical current. Various electro-chemical combinations provide this functionality, including Lead-Acid, Nickel-Cadmium, Lithium-Ion, Nickel-Metal-Hydride, etc. Rechargeable batteries may also be configured to conform to the same form factors and operational configurations as conventional finite batteries. Therefore, a AA type battery may be either a rechargeable or finite battery. Likewise, an electrical device configured to receive one or more AA type batteries may therefore operate with one or both rechargeable or finite batteries.

One of the problems with conventional rechargeable batteries and their operation relates to the different selective discharge profiles with respect to conventional finite batteries. For example, although both a rechargeable and a finite AA type battery are configured to deliver between 1.2 and 1.6 volts of electrical energy, the discharge rate between the two types of batteries is very different. A finite or alkaline battery will generally discharge a current at or near the configured rated voltage until substantial discharge has occurred, whereas a rechargeable battery will slowly decrease the voltage over the course of discharge. The operational performance and efficiency of certain electrical devices is directly dependent on the battery's discharged electrical current voltage. For example, the optical output of an electrical illumination device such as a flashlight directly corresponds to the operational voltage of the battery(s) on which it is powered. The electrical components of most illumination devices are optimized for finite batteries rather than rechargeable batteries. Therefore, although rechargeable batteries may be shaped and configured to operate in replace of a finite battery, the corresponding electrical device may not efficiently and/or properly function with a rechargeable battery. For example, an electrical device may only utilize a very limited amount of the electrical current capacity of the rechargeable battery before requiring and/or indicating that the battery must be recharged. Likewise, an electrical device may function improperly as a result of the alternative current voltage discharge of a rechargeable battery.

Another problem with conventional rechargeable batteries relates to the process of recharging. Many modem battery-powered electrical devices incorporate recharging systems within the device rather than requiring a user to remove and recharge the rechargeable batteries. Since rechargeable and finite batteries are configured with the same form factor to allow interchangeability, it is not possible for the device to efficiently distinguish between a finite and a rechargeable battery. Therefore, an electrical device configured to recharge a battery may potentially couple a finite battery to a recharging current. Exposing a finite battery to a recharging current may damage the device, the battery, and/or cause a dangerous chemical reaction.

Therefore, there is a need in the industry for a physically interchangeable rechargeable battery system that enables an electrical device to efficiently identify and utilize one or more rechargeable batteries in place of one or more finite batteries.

### SUMMARY OF THE INVENTION

The present invention relates to an improved interchangeable rechargeable battery system. One embodiment of the present invention relates to a rechargeable battery system, including a housing, a negative terminal, a positive terminal, and a third terminal. The housing substantially encloses a rechargeable electrical discharge member such as an electrochemical electrical storage device. The negative terminal is electrically coupled to the rechargeable electrical discharge member and may be electrically coupled to the housing. The positive terminal is electrically coupled to the rechargeable electrical discharge member and is electrically isolated from the negative terminal. The third terminal is electrically coupled to the negative terminal. The third terminal is also physically isolated from both the positive and negative terminal. A non-conductive sleeve substantially encases the housing, around which the positive, negative, and third terminals are externally exposed. Therefore, an electrical device configured to operate with either a rechargeable or finite battery may selectively detect the electrical voltage across the positive and third terminal rather than the positive and negative terminal; it will thus automatically calibrate electrical operation to correspond with a rechargeable battery. A second embodiment of the present invention relates to a method of manufacturing a rechargeable battery including the positive, negative, and third terminals. A third embodiment of the present invention relates to a battery powered electrical system configured to detect and adjust operation according to the type of battery detected.

Embodiments of the present invention represent a significant advance in the field of rechargeable battery systems. Conventional interchangeable rechargeable battery systems are designed to conform to the same general form factor and electrical operational configurations to enable interchangeability with finite batteries. For example, a conventional AA type rechargeable battery is cylindrical with the positive and negative terminals on opposite lengthwise sides. While matching the form factor and operational configuration of the rechargeable battery enables interchangeability, it does not enable the corresponding electrical device to optimize performance for the unique electrical discharge characteristics of a rechargeable battery. Embodiments of the present invention provide a rechargeable battery with a third terminal through which an electrical device may optionally detect whether or not the battery is a rechargeable battery. Therefore, the electrical device may optimize functionality according to the rechargeable battery characteristics. In addition, the electrical device may facilitate embedded recharging of the rechargeable batteries.

These and other features and advantages of the present invention will be set forth or will become more fully apparent in the description that follows and in the appended claims. The features and advantages may be realized and obtained by means of the instruments and combinations particularly pointed out in the appended claims. Furthermore, the features and advantages of the invention may be learned by the practice of the invention or will be obvious from the description, as set forth hereinafter.

### BRIEF DESCRIPTION OF THE DRAWING

The following description of the invention can be understood in light of the Figures, which illustrate specific aspects of the invention and are a part of the specification. Together with the following description, the Figures demonstrate and explain the principles of the invention. In the Figures, the physical dimensions may be exaggerated for clarity. The same reference numerals in different drawings represent the same element, and thus their descriptions will be omitted.
Figure 1 illustrates a technical schematic of a rechargeable battery and corresponding battery receptacle in accordance with embodiments of the present invention;
Figure 2 illustrates a schematic view of a finite alkaline battery and a rechargeable NiMH battery in accordance with embodiments of the present invention;
Figures 3A-C illustrate three operational configuration diagrams of a battery receptacle in accordance with embodiments of the present invention; and
Figure 4 illustrates a technical schematic of a battery recharging system in accordance with embodiments of the present invention.

### DETAILED DESCRIPTION OF THE INVENTION

The present invention relates to an improved interchangeable rechargeable battery system. One embodiment of the present invention relates to a rechargeable battery system, including a housing, a negative terminal, a positive terminal, and a third terminal. The housing substantially encloses a rechargeable electrical discharge member such as an electrochemical electrical storage device. The negative terminal is electrically coupled to the rechargeable electrical discharge member and may be electrically coupled to the housing. The positive terminal is electrically coupled to the rechargeable electrical discharge member and is electrically isolated from the negative terminal. The third terminal is electrically coupled to the negative terminal. The third terminal is also physically isolated from both the positive and negative terminal. A non-conductive sleeve substantially encases the housing around which the positive, negative, and third terminals are externally exposed. Therefore, an electrical device configured to operate with either a rechargeable or finite battery may selectively detect the electrical voltage across the positive and third terminal rather than the positive and negative terminal; it will thus automatically adjust electrical operation to correspond with a rechargeable battery. A second embodiment of the present invention relates to a method of manufacturing a rechargeable battery including the positive, negative, and third terminals. A third embodiment of the present invention relates to a battery powered electrical system configured to detect and adjust operation according to the type of battery detected. Also, while embodiments are described in reference to a rechargeable direct current electrochemical type battery, it will be appreciated that the teachings of the present invention are applicable to other areas.

The following terms are defined as follows:

### DEFINITIONS

Battery type - a set of form factor and operational configuration parameters that enable interchangeable use between batteries of the same type.

Form factor - a particular set of physical size and shape parameters. For example, a AA type battery conforms to a form factor of a cylinder approximately two inches long. In addition, a AA type battery includes positive and negative terminals on opposing lengthwise sides of the cylindrical region.

Operational configuration - a particular set of battery electrical configurations including an initial voltage. For example, a AA type battery includes an initial voltage of 1.5 V.

Electrical isolation - conductive regions may be electrically isolated from one another if there is not a conductive pathway therebetween. Likewise, it may be said that there is a high resistance between conductive regions which are electrically isolated from one another.

Physical isolation - regions may be physically isolated from one another by being disposed in different three dimensional regions on a particular member. Physical isolation further means that there is a particular separation between the two regions. For example, the positive and negative terminals of a standard finite AA battery are physically isolated from one another (disposed on opposite sides) and separated by a non-conductive sleeve region. Physically isolated regions may be adjacent to one another.

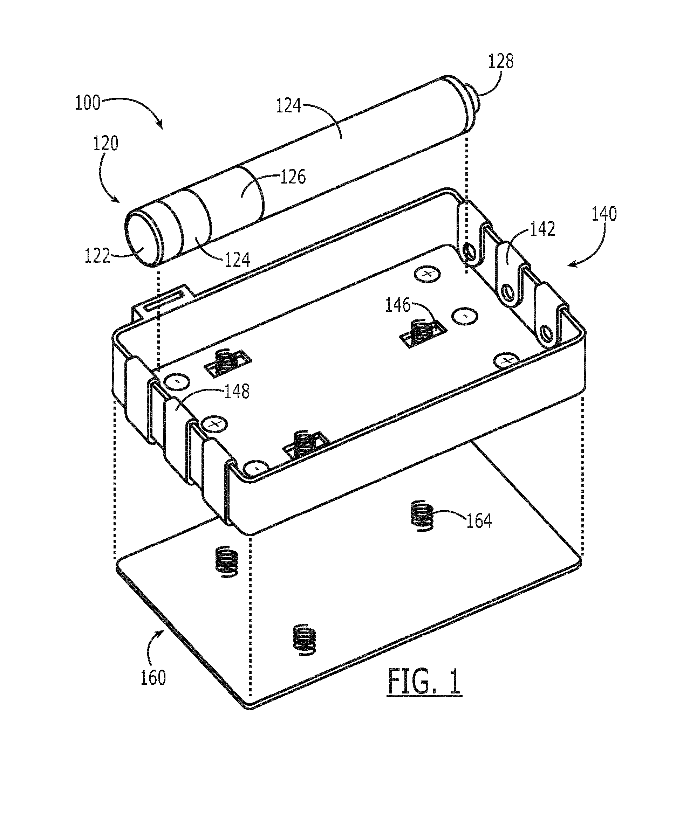

Reference is initially made to Figure 1, which illustrates a technical schematic of a rechargeable battery system and corresponding battery receptacle in accordance with embodiments of the present invention, designated generally at 100. The rechargeable battery system 120 is configured to releasably engage within a battery receptacle 140 disposed within an electrical device (not shown). The rechargeable battery system 120 is also configured to electrically couple with the battery receptacle 140 and the printed circuit board 160. The illustrated rechargeable battery system 120 includes a rechargeable electrical discharge member (not visible), a positive terminal 128, a negative terminal 122, a sleeve 124, and a third terminal 126. The rechargeable electrical discharge member is a chemical member such as a Nickel Metal Hydride, Lead-Acid, Nickel-Cadmium, lithium-polymer, or Lithium-Ion that stores and electrically discharges current upon electrical coupling. The rechargeable electrical discharge member is not visible because it is covered by the housing described below. The positive terminal 128 includes a positive protruded region electrically coupled to an interior electrical discharge member (not shown). A housing substantially encases the interior electrical discharge member. The housing may be composed of a conductive material. The negative terminal 122 is disposed on the opposite lengthwise side of the battery system 120 with respect to the positive terminal 128. The negative terminal 122 is electrically isolated from the positive terminal 128. The negative terminal 122 may be electrically coupled to and/or part of the housing. The sleeve 124 is composed of a non-conductive and/or insulative material, including but not limited to plastic. It will be appreciated that in alternative non-illustrated embodiments, the sleeve may be composed of a conductive material which is electrically isolated from the positive terminal. The sleeve 124 substantially encases and electrically isolates the housing. Therefore, only a portion of the housing is visible in Figure 1. The illustrated sleeve 124 includes a gapped region or recess over the housing corresponding to the third terminal 126. Alternatively, the third terminal may be a portion of the housing rather than a strip. The third terminal 126 is electrically coupled to the negative terminal. The illustrated third terminal 126 is an exposed portion of the housing with respect to the sleeve 124. Therefore, the third terminal 126 may function as a negative terminal 122 for electrical coupling and battery type identification. For example, the AA type voltage of 1.2 to 1.6 volts may be externally measurable across the positive and third terminals 128, 126. However, the unique sleeve 124 configuration enables the rechargeable battery system 120 to maintain a form factor and coupling scheme consistent with conventional AA type batteries.

The battery receptacle 140 includes three adjacent parallel battery receiving regions with corresponding positive couplers 148, negative couplers 142, and third couplers 146. The location of the positive and negative couplers 148, 142 in the illustrated embodiment conforms to the AA type form factors. The location of the third couplers 146 corresponds to the location of the third terminal 126 on the illustrated battery system 120. In addition, the battery receptacle 140 includes a recharging coupler 144 which may selectively be utilized to recharge a rechargeable battery system 120. For example, the illustrated recharging coupler 144 may be a micro USB port to facilitate the coupling of a corresponding charging cord. The illustrated printed circuit board (PCB) 160 is electrically coupled with the positive, negative, and third couplers 148, 142, 146 of the battery receptacle 140. The PCB 160 is physically coupled to the bottom of the battery receptacle 140 such that electrical coupling is created between the terminals and corresponding regions of the PCB160, as illustrated. The PCB 160 may include an algorithm (not shown) which selectively changes the operation of a corresponding electrical device if a voltage is detected between the positive and third couplers 148, 146 rather than only the positive and negative couplers 148, 142. The PCB 160 further includes interior couplers 164 corresponding to the third couplers 126 and the third terminals 146 of the battery system 120 and battery receptacle 140 respectively. The PCB 160 may be electrically coupled to the recharging coupler 144 to facilitate the charging of a rechargeable battery system 120 according to a particular algorithm. Likewise, the PCB may include some form of indicator light that indicates the capacity of a finite or rechargeable battery. It will be appreciated that the PCB 160 may include various electrical components including but not limited to microprocessors, power supplies, data storage devices, etc.

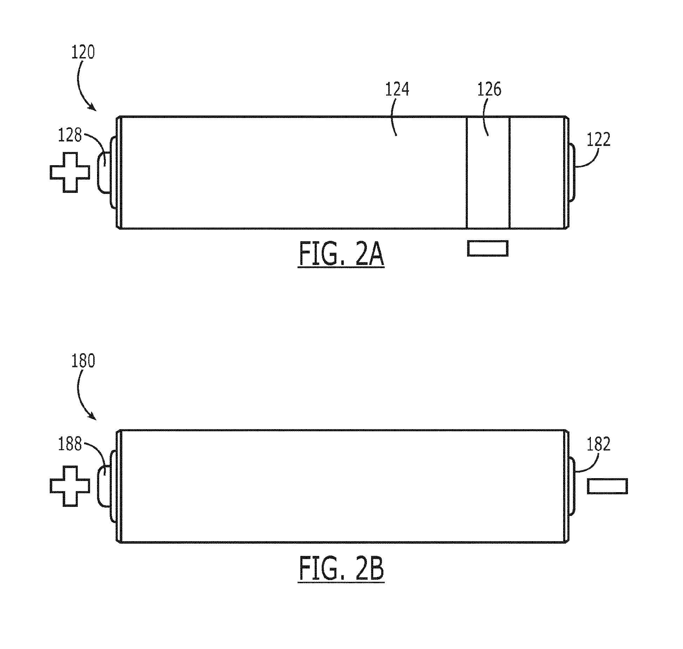

Reference is next made to Figure 2, which illustrates a schematic view of a finite alkaline battery system and a rechargeable NiMH battery system, designated generally at 180 and 120 respectively. Both the finite alkaline battery system 180 and the rechargeable battery system 120 are AA type battery systems. Therefore, both battery systems 180, 120 conform to the same physical form factor and may be interchangeably inserted into a battery receptacle 140 of the type illustrated in Figure 1. The unique sleeve 124 configuration of the rechargeable battery system 120 includes a non-conductive material covering a a particular circumferential portion of the housing except for an exposed region of the housing corresponding to the third terminal 126. Therefore, the negative terminal 122 is electrically isolated from the exterior sleeve 124of the system 120. Both the negative terminal 122 and the third terminal 126 are electrically coupled to the housing. The third terminal 126 may act as a negative terminal for purposes of electrical current discharge and battery type identification. An electrical voltage may thus be externally measured across the both positive and third terminals 128, 126 and the positive and negative terminals 128, 122 of the rechargeable battery system 120. Whereas, an electrical voltage is only measurable across the positive and negative terminals 188, 182 of the alkaline finite battery system 180. The unique ability to measure an electrical voltage across the positive and third terminals 128, 126 of the rechargeable battery enables an electrical device to efficiently identify whether a particular battery is a finite battery or a specific type of rechargeable battery independent of the form factor.

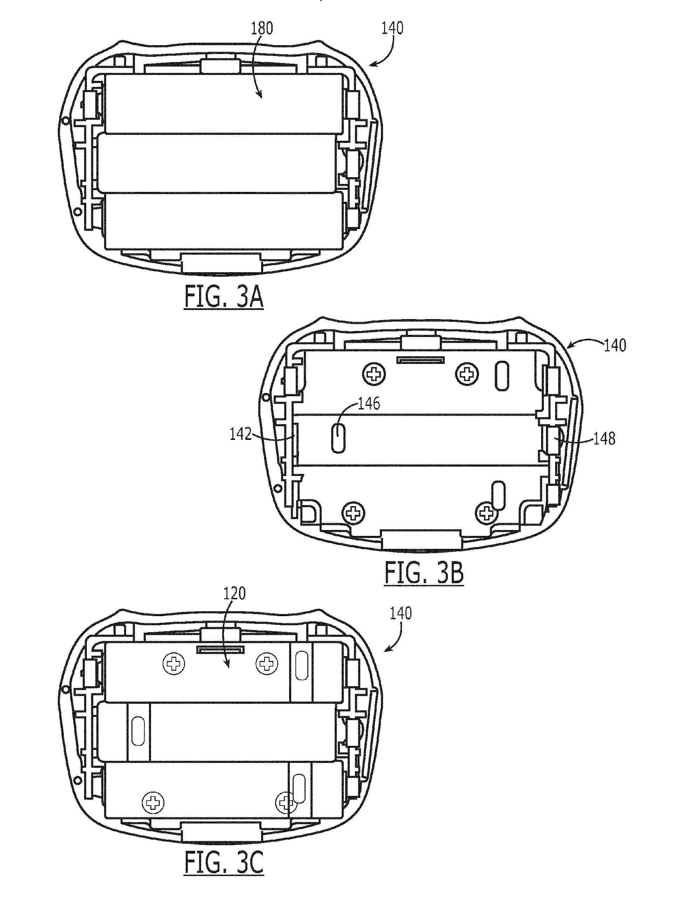

Reference is next made to Figures 3A-C, which illustrate three operational diagrams of a battery receptacle 140 in accordance with embodiments of the present invention. The battery receptacle 140 is illustrated in three configuration including 1) with a set of rechargeable battery systems 120 (Figure 3C), 2) a set of finite alkaline battery systems 180 (Figure 3A), and 3) without any battery systems (Figure 3B). As discussed above, the battery receptacle 140 includes positive, negative, and third couplers 148, 142, 146 respectively. The battery receptacle 140 is therefore electrically coupled to the positive and negative terminals of the finite battery 180 and the positive, negative, and third terminals of the rechargeable battery system 120. The battery receptacle 140 may sense the type of battery by whether a voltage exists across the positive and third terminals..

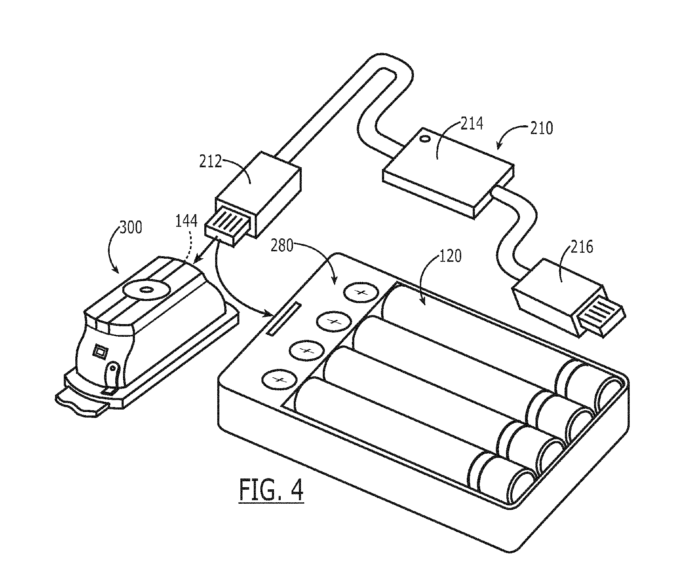

Reference is next made to Figure 4, which illustrates a technical schematic of a battery recharging system in accordance with embodiments of the present invention. An electrical device 300 may include a battery receptacle 140 which may receive either finite or rechargeable battery systems 180, 120. The electrical device 300 includes an external coupling to the recharging coupler 144 (see Figure 1) of the battery receptacle. An algorithm on the PCB 160 (not visible) detects whether the batteries within the battery receptacle 140 are rechargeable or finite based on whether a voltage exists only across the positive and negative terminals or across both the positive and negative and the positive and third terminals. If the algorithm determines the batteries are rechargeable, the algorithm may adjust the operational characteristics of the electrical device 300 so as to optimize rechargeable battery usage and facilitate selective recharging. An external battery recharging member 210 may be used to directly electrically couple the electrical device 300 to an electrical power source such as an AC outlet or a USB port. The illustrated recharging member 210 includes a micro-USB connector 212, a transformer 214, and a USB connector 216. The male USB connector 216 may be coupled to a standard powered female USB port for purposes of charging. It will be appreciated that various connectors and coupling schemes may be used in accordance with embodiments of the present invention. In addition, a secondary external recharging system 280 may be used to externally recharge the rechargeable battery systems 120 disposed within the electrical device 300. The external recharging system 280 may also be specifically configured to recharge the rechargeable battery system 120 across the positive and third terminals.

It should be noted that various alternative system designs may be practiced in accordance with the present invention, including one or more portions or concepts of the embodiment illustrated in Figures 1-4 or described above. Various other embodiments have been contemplated, including combinations in whole or in part of the embodiments described above.

## Claims

1. A rechargeable battery system comprising:
a housing configured to substantially enclose a rechargeable electrical discharge member;
a negative terminal electrically coupled to the rechargeable electrical discharge member;
a positive terminal electrically coupled to the rechargeable electrical discharge member and electrically isolated from the negative terminal;
a third terminal electrically coupled to the rechargeable electrical discharge member and the negative terminal, and wherein the third terminal is physically isolated from both the positive and negative terminal; and
a non-conductive sleeve substantially encasing the housing around which the positive and third terminals are externally exposed.

2. The system of claim 1, wherein the rechargeable battery system conforms to one of a AA, AAA, C, and D battery form factors.

3. The system of claim 1, wherein the third terminal is physically closer to the negative terminal than the positive terminal.

4. The system of claim 1, wherein the third terminal is a cylindrically shaped exposed region of the housing corresponding to a gap in the sleeve.

5. The system of claim 1, wherein the electrical discharge member chemically comprises at least one of Nickel Metal Hydride, Lead-Acid, Nickel-Cadmium, lithium-polymer, and Lithium-Ion.

6. The system of claim 1, wherein the housing is conductive and electrically coupled to the negative terminal and the rechargeable electrical discharge member.

7. The system of claim 1, wherein the negative terminal is externally exposed with respect to the non-conductive sleeve.

8. A method for manufacturing a rechargeable battery system to facilitate interchangeable operation with a finite battery and independent identification as a rechargeable battery comprising the acts of:
providing a housing configured to substantially enclose a rechargeable electrical discharge member;
electrically coupling a negative terminal to the rechargeable electrical discharge member;
electrically coupling a positive terminal to the rechargeable electrical discharge member;
electrically isolating the positive terminal from the negative terminal;
electrically coupling a third terminal to the rechargeable electrical discharge member and the negative terminal;
physically isolating the third terminal from both the positive and negative terminals; and
substantially encasing the housing with a non-conductive sleeve around which the positive and third terminals are externally exposed.

9. The method of claim 8, further includes conforming the form factor of the rechargeable battery system to one of a AA, AAA, C, and D.

10. The method of claim 8, wherein the act of electrically coupling a third terminal to the rechargeable electrical discharge member and the negative terminal includes positioning the third terminal physically closer to the negative terminal with respect to the positive terminal.

11. The method of claim 8, wherein the act of electrically coupling a third terminal to the rechargeable electrical discharge member and the negative terminal includes configuring the third terminal as a cylindrically exposed region of the housing corresponding to a gap in the sleeve.

12. The method of claim 8, wherein the rechargeable electrical discharge member chemically comprises at least on one of Nickel Metal Hydride, Lead-Acid, Nickel-Cadmium, lithium-polymer, and Lithium-Ion.

13. The method of claim 8, wherein the acts further include electrically coupling the housing to the negative terminal and the rechargeable electrical discharge member.

14. The method of claim 8, wherein the act of substantially encasing the housing with a non-conductive sleeve around which the positive and third terminals are externally exposed further includes externally exposing the negative terminal.

15. A battery powered electrical device configured to detect and adjust performance according to the type of battery, comprising:
a battery receptacle including a positive, negative, and third electrically isolated couplings, wherein the physical location of the positive and negative electrically isolated couplings corresponds to a particular battery type;
a control circuit electrically coupled to the positive, negative, and third electrically isolated couplings; and
an algorithm configured to selectively adjust operation of the control circuit if an electrical voltage is detected across the positive and third electrically isolated couplings.

16. The system of claim 15, wherein the control circuit includes a microprocessor.

17. The system of claim 15, wherein the algorithm further includes selectively electrically coupling a recharging coupler to the positive and negative electrically isolated couplings if an electrical voltage is detected across the positive and third electrically isolated couplings and an electrical current is detected at the recharging coupler.

18. The system of claim 15, wherein the algorithm further includes selectively electrically coupling a recharging coupler if an electrical voltage is detected across the positive and third electrically isolated couplings and an electrical current is detected at the recharging coupler.

19. The system of claim 15, wherein the algorithm includes electrically coupling the positive and negative electrically isolated couplings to an output circuit.

20. The system of claim 19, wherein the output circuit is configured to generate an optical output.
